# EUROPÄISCHE PATENTSCHRIFT

(11) **EP 2 904 695 B1**
(45) Veröffentlichungstag und Bekanntmachung des Hinweises auf die Patenterteilung: **14.12.2016**
(21) Anmeldenummer: 13777221.6
(22) Anmeldetag: 20.09.2013
(51) Int. Cl.: H02K 41/03

(54) **PLANARANTRIEB SOWIE VERFAHREN ZU DESSEN KALIBRIERUNG**
PLANAR DRIVE AND METHOD FOR THE CALIBRATION THEREOF
ENTRAÎNEMENT PLANAIRE ET PROCÉDÉ POUR LE CALIBRER

(30) Priorität: 02.10.2012 DE 102012218039
(43) Veröffentlichungstag der Anmeldung: 12.08.2015
(73) Patentinhaber: Schaeffler Technologies AG & Co. KG, 91074 Herzogenaurach (DE)
(72) Erfinder: KEGELER, Jörg, 98553 Schleusingen (DE)
(86) Internationale Anmeldenummer: PCT/DE2013/200183
(87) Internationale Veröffentlichungsnummer: WO 2014/053131

(56) Entgegenhaltungen:
- US-A1- 2007 035 267
- US-A1- 2011 053 062

## Beschreibung

Die vorliegende Erfindung betrifft ein Verfahren zur Kalibrierung eines Planarantriebes, beispielsweise zur Kalibrierung eines Planarmotors oder zur Kalibrierung eines Portalantriebes. Weiterhin betrifft die Erfindung einen Planarantrieb, welcher für die erfindungsgemäße Kalibrierung konfiguriert ist.

Die DE 103 29 931 A1 zeigt einen planaren Direktantrieb mit einem Positionsmesssystem. Der planare Direktantrieb umfasst eine Passiveinheit, eine Aktiveinheit, eine Lagereinheit und ein Positionsmesssystem. Das Positionsmesssystem umfasst einen die Maßverkörperung abtastenden und ein Positionssignal liefernden Messsensor. Das Positionsmesssystem besteht aus einer bewegten Komponenten und einer quasistationären Komponenten, von denen die eine durch die Maßverkörperung und die andere durch den Messsensor gebildet ist. Beide Komponenten sind außerhalb des Lagerspalts und beabstandet zur Lauffläche angeordnet.

Die DE 10 2006 024 150 A1 zeigt einen planaren Direktantrieb mit verbesserter Positionsbestimmung. Der planare Direktantrieb umfasst eine planare Passiveinheit mit magnetisierbaren Zähnen, wobei sowohl die Grundfläche der magnetisierbaren Zähne als auch deren Zahnlücken zumindest in einer ersten Richtung y eine konstante Länge I aufweisen. Weiterhin umfasst der Direktantrieb eine Aktiveinheit mit Spulen zur Erzeugung eines veränderlichen Magnetflusses und mit einer Sensoreinheit zur Positionsbestimmung der Aktiveinheit. Die Sensoreinheit weist mindestens eine Magnetfeldquelle auf, deren Magnetfeld zumindest teilweise durch die magnetisierbaren Zähne der Passiveinheit verläuft. Zwei Sensoren dienen der Erfassung positionsabhängiger Änderungen des durch die Magnetfeldquelle bereitgestellten Magnetfeldes.

Aus der WO 2011/064317 A2 ist ein Kalibrierverfahren für eine Winkelmesseinrichtung bekannt, bei welchem Winkelpositionswerte von mehreren Leseköpfen erfasst werden, die unterschiedliche Winkelstellungen gegenüber einem Codeträger einnehmen können. Es wird ein Winkelfehler bestimmt, indem die Differenzen der Winkelpositionswerte der Leseköpfe mit der bekannten Winkellage der Leseköpfe zueinander verglichen werden. Dies wird für variierende Winkelstellungen wiederholt. Aus den ermittelten Winkelfehlern lassen sich Parameter für die Kalibrierung der Winkelmesseinrichtung bestimmen, ohne dass es hierfür einer Referenz bedarf.

US 2011/053062 A1 offenbart zwar ein Verfahren zum Kalibrieren eines Planarmotors mit einer magnetischen Einheit zum Bewegen des Läufers in x- und y-Richtung, wobei auf dem Läufer vier Köpfe mit einem optischen Gitter angeordnet sind. Der Läufer wird in verschiedene Positionen bewegt und ein Korrekturfaktor anhand der gemessenen Positionen des Läufers ermittelt.

US 2007/035267 A1 offenbart einen weiteren Planarantrieb mit zwei y-Antrieben und zwei x-Antrieben sowie x- und y-Sensoren.

Die Aufgabe der vorliegenden Erfindung besteht ausgehend vom Stand der Technik darin, die mit einem Planarantrieb erzielbare Genauigkeit signifikant zu erhöhen, ohne dass hierfür veränderte Antriebe oder veränderte Sensoren erforderlich sind.

Die genannte Aufgabe wird gelöst durch ein Verfahren zur Kalibrierung eines Planarantriebes gemäß dem beigefügten Anspruch 1 und durch einen Planarantrieb gemäß dem beigefügten nebengeordneten Anspruch 10.

Das erfindungsgemäße Verfahren dient der Kalibrierung eines Planarantriebes, woraufhin das Anfahren von vorgegebenen Positionen mit einer erhöhten Genauigkeit erfolgen kann. Das erfindungsgemäße Verfahren dient insbesondere der Kalibrierung solcher Planarantriebe, die einen bevorzugt planen Stator und einen gegenüber dem Stator in eine x-Richtung und in eine y-Richtung verfahrbaren Läufer umfassen. Die x-Richtung und die y-Richtung sind bevorzugt senkrecht zueinander ausgerichtet und können beispielsweise jeweils eine horizontale Richtung oder eine vertikale Richtung darstellen. Die x-Richtung und die y-Richtung spannen eine Bewegungsebene des Läufers auf, welche bevorzugt parallel zum Stator angeordnet ist. Der Läufer kann in der Bewegungsebene verfahren werden und dort verschiedene Positionen einnehmen, welche sich in der x-Richtung und/oder in der y-Richtung voneinander unterscheiden. Der Planarantrieb kann beispielsweise durch einen Planarmotor oder durch ein x-y-Portal gebildet sein.

Der Planarantrieb umfasst mindestens einen auf dem Läufer angeordneten ersten x-Antrieb zum Antreiben des Läufers in die x-Richtung. Bevorzugt dient eine x-Ansteuereinheit des Planarantriebes zum Ansteuern des ersten x-Antriebes. Die erste x-Ansteuereinheit kann als Regelung oder als Steuerung ausgebildet sein.

Weiterhin umfasst der Planarantrieb einen auf dem Läufer angeordneten ersten y-Antrieb zum Antreiben des Läufers in die y-Richtung und einen auf dem Läufer angeordneten zweiten y-Antrieb zum Antreiben des Läufers in die y-Richtung. Der zweite y-Antrieb ist in der x-Richtung beabstandet zum ersten y-Antrieb angeordnet.

Der erste y-Antrieb, der zweite y-Antrieb und der mindestens eine x-Antrieb sind bevorzugt jeweils durch einen Elektromagneten gebildet, welcher mit magnetisierbaren Kraftübertragungselementen des Stators zusammenwirkt.

Der Planarantrieb umfasst weiterhin einen y-Sensor zur Bestimmung der Position des Läufers gegenüber dem Stator in der y-Richtung. Mithilfe des y-Sensors kann die y-Komponente der Position des Läufers gegenüber dem Stator gemessen werden. Der y-Sensor ist beabstandet zum ersten y-Antrieb auf dem Läufer angeordnet. Der y-Sensor ist bevorzugt in der x-Richtung beabstandet zum ersten y-Antrieb angeordnet. Der y-Sensor ist in der x-Richtung bevorzugt auch beabstandet zum zweiten y-Antrieb angeordnet. Dabei ist der y-Sensor bevorzugt auch in der y-Richtung jeweils zum ersten y-Antrieb und zum zweiten y-Antrieb beabstandet angeordnet.

Weiterhin umfasst der Planarantrieb eine y-Ansteuereinheit zum Ansteuern des y-Antriebes. Die y-Ansteuereinheit kann als Regelung oder als Steuerung ausgebildet sein. Der y-Sensor ist mit der y-Ansteuereinheit elektrisch verbunden und kann einen Teil der y-Ansteuereinheit bilden.

Der Planarantrieb umfasst mindestens einen auf dem Läufer angeordneten ersten x-Sensor zur Bestimmung der Position des Läufers gegenüber dem Stator in der x-Richtung. Der erste x-Sensor ist bevorzugt in der x-Richtung und/oder in der y-Richtung beabstandet zum ersten y-Antrieb auf dem Läufer angeordnet.

Bei dem mindestens einen x-Sensor und dem y-Sensor handelt es sich bevorzugt um inkrementell arbeitende Sensoren.

Das erfindungsgemäße Verfahren umfasst zunächst einen Schritt, bei welchem der erste y-Antrieb über die y-Ansteuereinheit zum Fixieren des Läufers am Ort des ersten y-Antriebes in der y-Richtung angesteuert wird. Folglich ist eine Bewegung des Läufers am Ort des ersten y-Antriebes in die y-Richtung verhindert. Bewegungen des Läufers in die x-Richtung oder Verdrehungen des Läufers sind dadurch allein noch nicht verhindert. Das Fixieren kann beispielsweise dadurch erfolgen, dass der durch einen Elektromagneten gebildete erste y-Antrieb konstant bestromt wird, sodass eine Zugkraft auf eine der magnetisierbaren Kraftübertragungselemente des Stators wirkt und der erste y-Antrieb dort verharrt.

Während der erste y-Antrieb den Läufer am Ort des ersten y-Antriebes fixiert, erfolgt ein weiterer Schritt des erfindungsgemäßen Verfahrens, bei welchem der zweite y-Antrieb über die y-Ansteuereinheit zum Verfahren des Läufers in die y-Richtung angesteuert wird. Dabei wird über die y-Ansteuereinheit ein Verfahren des ersten y-Antriebes über eine erste Wegstrecke angesteuert, wobei es wegen der noch nicht erfolgten Kalibrierung der y-Ansteuereinheit zu Abweichungen im tatsächlich vom zweiten y-Antrieb zurückgelegten Weg kommen kann. Da der erste y-Antrieb an seinem Ort den Läufer festhält, kann der Läufer dem zweiten y-Antrieb nicht durch eine Translationsbewegung folgen. Stattdessen wird der Läufer in einer senkrecht zur Bewegungsebene angeordneten Drehachse gedreht. Dabei liegt die Drehachse nahe oder im ersten y-Antrieb, wobei sich die Drehachse gegenüber dem Stator auch verschieben kann, insbesondere in die x-Richtung. Der zweite y-Antrieb wirkt aufgrund des fixierenden y-Antriebes als Umlenkhebel. Die Drehung um die Drehachse beträgt bevorzugt weniger als 10°. Dadurch wird auch die Länge der ersten Wegstrecke bestimmt. Die Drehung um die Drehachse kann auch als Kippbewegung aufgefasst werden.

Während der Läufer durch den zweiten y-Antrieb gedreht wird, erfolgt ein Messen der Verdrehung, wofür zumindest der erste x-Sensor benutzt wird. Wegen der beabstandeten Anordnung der Sensoren und der Antriebe auf dem Läufer ist die am ersten x-Sensor messbare Wegstrecke abhängig von der Verdrehung, bevorzugt linear. Zum Messen der Verdrehung wird das Signal des ersten x-Sensors in Abhängigkeit von der mit der y-Ansteuereinheit angesteuerten ersten Wegstrecke des zweiten y-Antriebes aufgezeichnet. Im Resultat liegt eine Zuordnung von Messwerten für die Verdrehung zu den von der noch unkalibrierten y-Ansteuereinheit zu verursachenden Verdrehungen vor. Dadurch ist es möglich, den ersten x-Sensor zur Kalibrierung der y-Ansteuereinheit zu verwenden. Somit kann die Genauigkeit dieses x-Sensors auf die y-Ansteuerung, d. h. insbesondere auf den y-Sensor abgebildet werden. Daher erfolgt ein Kalibrieren der y-Ansteuereinheit durch ein Bewerten des Signals des y-Sensors mit dem aufgezeichneten Signal des x-Sensors.

Bevorzugt wird neben dem ersten x-Sensor auch ein zweiter x-Sensor oder einer der x-Antriebe zum Messen der Verdrehung verwendet. Insofern einer der x-Antriebe zum Messen der Verdrehung verwendet wird, so liegt die Verwendung darin, dass dieser x-Antrieb während der Messung auf den Läufer einwirkt, damit die Verdrehung eindeutig allein durch den ersten x-Sensor messbar ist.

Ein besonderer Vorteil des erfindungsgemäßen Verfahrens besteht darin, dass die mit vorhandenen Antrieben und Sensoren erzielbare Genauigkeit um eine Größenordnung erhöht werden kann, beispielsweise in den Submikrometerbereich. Das erfindungsgemäße Verfahren kann ohne Referenzmesssystem durchgeführt werden. Es bedarf nur eines y-Sensors. Auch sind keine konstruktiven Änderungen am Planarantrieb erforderlich.

Gemäß einer ersten bevorzugten Ausführungsform des erfindungsgemäßen Verfahrens, wird einer der x-Antriebe zum Fixieren des Läufers am Ort dieses x-Antriebes in der x-Richtung angesteuert, während der zweite y-Antrieb über die erste Wegstrecke verfahren wird. Dadurch kann sich der Läufer auch nicht in die x-Richtung translatorisch bewegen, was dazu führt, dass allein das Signal des ersten x-Sensors die Verdrehung des Läufers repräsentiert. Daher umfasst der Planarantrieb bevorzugt einen zweiten x-Antrieb zum Antreiben des Läufers in die x-Richtung, der in der y-Richtung beabstandet zum ersten x-Antrieb auf dem Läufer angeordnet ist. Der zweite x-Antrieb wird bevorzugt zum Fixieren des Läufers am Ort des zweiten x-Antriebes in der x-Richtung angesteuert, während der erste y-Antrieb zum Fixieren angesteuert wird und der zweite y-Antrieb über die erste Wegstrecke verfahren wird. Der Planarantrieb umfasst bevorzugt weiterhin einen zweiten x-Sensor zur Bestimmung der Position des Läufers gegenüber dem Stator in der x-Richtung, wobei der zweite x-Sensor in der y-Richtung beabstandet zum ersten x-Sensor angeordnet ist. Das Fixieren des zweiten x-Antriebes erfolgt dann bevorzugt durch ein geregeltes Ansteuern unter Nutzung des zweiten x-Sensors.

Bei einer alternativen bevorzugten Ausführungsform umfasst der Planarantrieb ebenfalls weiterhin einen zweiten x-Sensor zur Bestimmung der Position des Läufers gegenüber dem Stator in der x-Richtung. Der zweite x-Sensor ist in der y-Richtung beabstandet zum ersten x-Sensor angeordnet ist. Bei dieser Ausführungsform erfolgt das Messen der Verdrehung des Läufers auch unter Verwendung des zweiten x-Sensors. Hierfür wird auch das Signal des zweiten x-Sensors während des Verfahrens des zweiten y-Antriebes in Abhängigkeit von der mit der y-Ansteuereinheit angesteuerten ersten Wegstrecke des zweiten y-Antriebes aufgezeichnet. Während des Verfahrens des zweiten y-Antriebes unterbleibt bevorzugt ein Ansteuern der x-Antriebe, d. h. der eine oder die mehreren x-Antriebe werden nicht bestromt. Die aufgezeichneten Signale des ersten x-Sensors und des zweiten x-Sensors repräsentieren gemeinsam die Verdrehung. Insbesondere wird die Verdrehung durch eine Differenz der Signale des ersten x-Sensors und des zweiten x-Sensors repräsentiert.

Daher erfolgt das Kalibrieren der y-Ansteuereinheit durch ein Bewerten des Signals des y-Sensors mit den aufgezeichneten Signalen des ersten x-Sensors und des zweiten x-Sensors. Bevorzugt wird aus den aufgezeichneten Signalen des ersten x-Sensors und des zweiten x-Sensors ein die Verdrehung des Läufers repräsentierender Wert bestimmt, indem die Differenz der Signale des ersten x-Sensors und des zweiten x Sensors bestimmt wird. Aus dem die Verdrehung repräsentierenden Wert wird ein Korrekturwert zur Kalibrierung der y-Ansteuereinheit, insbesondere zur Bewertung des Signals des y-Sensors bestimmt.

Bei den oben beschriebenen alternativen Ausführungsformen wird der zweite y-Antrieb bevorzugt schrittweise über die erste Wegstrecke verfahren. Somit werden Reihen von Wertepaaren ermittelt.

Da dem Verdrehen des Läufers Grenzen gesetzt sind, ist die erste Wegstrecke mitunter nicht ausreichend, um genügend Messwerte für eine Kalibrierung mit der gewünschten Genauigkeit aufzunehmen. Daher wird nach dem Verfahren des zweiten y-Antriebes über die erste Wegstrecke der erste y-Antrieb bevorzugt versetzt, um den Läufer anschließend erneut mithilfe des zweiten y-Antriebes über eine weitere Wegstrecke zu verfahren und dadurch zu drehen. Hierfür erfolgen bevorzugt folgende Schritte, die nach dem oben beschriebenen Ansteuern des ersten y-Antriebes zum Fixieren des y-Antriebes, nach dem Ansteuern des zweiten y-Antriebes zum Verfahren über die erste Wegstrecke und nach dem Aufzeichnen des Signals des ersten x-Sensors und nach dem ggf. durchgeführten Aufzeichnen des zweiten x-Sensors durchzuführen sind. Zunächst wird der erste y-Antrieb über die y-Ansteuereinheit zum Verfahren des Läufers über eine Versatzwegstrecke in die y-Richtung angesteuert. Danach wird der erste y-Antrieb über die y-Ansteuereinheit erneut zum Fixieren des Läufers am erreichten Ort des ersten y-Antriebes angesteuert. Nachdem der erste y-Antrieb fixiert ist, wird der zweite y-Antrieb über die y-Ansteuereinheit zum Verfahren des Läufers über eine weitere Wegstrecke in die y-Richtung angesteuert. Dabei kommt es wegen des fixierenden ersten y-Antriebes erneut zum Verdrehen des Läufers in einer senkrecht zur Bewegungsebene angeordneten Drehachse. Während der erneuten Verdrehung wird das Messen der Verdrehung des Läufers unter Verwendung des ersten x-Sensors fortgesetzt. Hierfür wird das Signal des ersten x-Sensors in Abhängigkeit von der mit der y-Ansteuereinheit angesteuerten weiteren Wegstrecke des zweiten y-Antriebes weiter aufgezeichnet. Dabei wird der zum Messen der Verdrehung während des Verfahrens über die erste Wegstrecke ggf. verwendete zweite x-Sensor oder der ggf. verwendete x-Antrieb in gleicher Weise wieder verwendet. Das Kalibrieren der y-Ansteuereinheit wird durch ein Bewerten des Signals des y-Sensors mit dem aufgezeichneten weiteren Signal des ersten x-Sensors fortgesetzt.

Zur Erzielung der gewünschten Genauigkeit kann es notwendig sein, den ersten y-Antrieb mehrfach zu versetzen, sodass der zweite y-Antrieb mehrfach über die Wegstrecke verfahren werden kann. Daher wird das Ansteuern des ersten y-Antriebes über die y-Ansteuereinheit zum Verfahren des Läufers über eine Versatzwegstrecke in die y-Richtung bevorzugt mehrfach wiederholt. Nach jedem Verfahren des Läufers über die Versatzwegstrecke ist der erste y-Antrieb erneut über die y-Ansteuereinheit zum Fixieren des Läufers am jeweils erreichten Ort des ersten y-Antriebes anzusteuern. Ebenso ist der zweite y-Antrieb über die y-Ansteuereinheit zum Verfahren des Läufers über eine weitere Wegstrecke in die y-Richtung anzusteuern, während der erste y-Antrieb fixiert. Es kommt jeweils wegen des fixierenden ersten y-Antriebes zum wiederholten Verdrehen des Läufers in einer senkrecht zur Bewegungsebene angeordneten Drehachse. Es ist wieder jeweils die Verdrehung des Läufers unter Verwendung des ersten x-Sensors zu messen, wofür das Signal des ersten x-Sensors weiter aufzuzeichnen ist. Hierdurch kann das Kalibrieren der y-Ansteuereinheit fortgesetzt werden.

Die erste Wegstrecke und die weiteren Wegstrecken sind bevorzugt jeweils gleich lang. Ebenso sind die Versatzwegstrecken bevorzugt gleich lang.

Der erste y-Antrieb und der zweite y-Antrieb weisen bevorzugt jeweils mindestens zwei in der y-Richtung beabstandete Kraftübertragungselemente auf. Die Kraftübertragungselemente sind bevorzugt durch magnetische oder magnetisierbare Pole gebildet.

Durch den Abstand der Kraftübertragungselemente in der y-Richtung ist eine Periode der beiden y-Antriebe bestimmt.

Bevorzugt gleicht die Periode in der y-Richtung einer Motorperiode der y-Antriebe und/oder einer Sensorperiode des y-Sensors.

Die erste Wegstrecke und die ggf. verfahrenen weiteren Wegstrecken betragen bevorzugt jeweils das Einfache oder genau einen ganzen Bruchteil der Periode. Dabei beträgt die Summe der ersten Wegstrecke und der ggf. verfahrenen weiteren Wegstrecken bevorzugt gleich der Periode, sodass durch das Kalibrieren die periodischen Fehler des y-Sensors korrigiert werden können. Weiter bevorzugt beträgt die Summe der ersten Wegstrecke und der ggf. verfahrenen weiteren Wegstrecken ein Mehrfaches der Periode. Dann werden die aufgezeichneten Signale des ersten x-Sensors und ggf. des zweiten x-Sensors bezogen auf die von der mit der y-Ansteuereinheit angesteuerten Wegstrecke des zweiten y-Antriebes bevorzugt periodenweise bewertet. Dies erfolgt bevorzugt für schrittweise aufgenommene Signale des ersten x-Sensors und ggf. des zweiten x-Sensors, wobei die Schritte bezogen auf die mit dem zweiten y-Antrieb verfahrene Periode immer dieselbe Phasenlage besitzen, z. B. immer bei 0, π/10, 2π/10, 3π/10, 4π/10, 5π/10 usw. der Periode. Diejenigen Messwerte der aufgenommene Signale des ersten x-Sensors und ggf. des zweiten x-Sensors, welche bezogen auf die Periode die gleiche Phasenlage besitzen, werden addiert. Dieses periodenartige Bewerten führt dazu, dass die Summation aller Fehler einen Offsetfehler in Form einer Konstante ergibt, der bei inkrementell arbeitenden Messprinzipien zu vernachlässigen ist. Wird über mehrere Perioden gemittelt, so ergibt sich für jede der y-Positionen der gleiche Offsetfehler.

Bevorzugt umfasst der Planarantrieb weiterhin einen zweiten x-Antrieb zum Antreiben des Läufers in die x-Richtung, wobei der zweite x-Antrieb in der y-Richtung beabstandet zum ersten x-Antrieb auf dem Läufer angeordnet ist. Der Planarantrieb weist bevorzugt eine x-Ansteuereinheit zum Ansteuern des ersten x-Antriebes und des zweiten x-Antriebes auf.

Der erste x-Sensor dient dabei bevorzugt zum geregelten Ansteuern des ersten x-Antriebes, während der zweite x-Sensor bevorzugt zum geregelten Ansteuern des zweiten x-Antriebes dient. Hierfür sind der erste x-Sensor und der zweite x-Sensor elektrisch mit der x-Ansteuereinheit verbunden und bilden bevorzugt Komponenten der x-Ansteuereinheit.

Bei den genannten Ausführungen des Planarantriebes mit den zwei x-Antrieben umfasst das erfindungsgemäße Verfahren bevorzugt weiterhin Schritte zum Kalibrieren der x-Ansteuereinheit. Dieses Kalibrieren erfolgt analog der erfindungsgemäßen Kalibrierung der y-Ansteuereinheit. Zunächst ist der erste x-Antrieb über die x-Ansteuereinheit zum Fixieren des Läufers in der x-Richtung am Ort des ersten x-Antriebes anzusteuern. Währenddessen ist der zweite x-Antrieb über die x-Ansteuereinheit zum Verfahren des Läufers über eine erste x-Wegstrecke in die x-Richtung anzusteuern. Dabei kommt es wegen des fixierenden ersten x-Antriebes entsprechend wieder zum Verdrehen des Läufers in einer senkrecht zur Bewegungsebene angeordneten Drehachse. Die Verdrehung des Läufers ist unter Verwendung des y-Sensors zu messen, wofür das Signal des y-Sensors in Abhängigkeit von der mit der x-Ansteuereinheit angesteuerten ersten x-Wegstrecke des zweiten x-Antriebes aufzuzeichnen ist. Das Kalibrieren der x-Ansteuereinheit erfolgt durch ein Bewerten des Signals des ersten x-Sensors und/oder des zweiten x-Sensors mit dem aufgezeichneten Signal des y-Sensors.

Bei besonderen Ausführungsformen umfasst der Planarantrieb zwei der y-Sensoren, sodass der genannte y-Sensor einen ersten y-Sensor bildet und der Planarantrieb weiterhin einen zweiten y-Sensor umfasst.

Der erste x-Antrieb und der zweite x-Antrieb sowie der erste y-Sensor und der zweite y-Sensor können bei den beschriebenen Schritten alternativ verwendet werden.

Entsprechend wie bei der Kalibrierung der y-Ansteuereinheit wird bevorzugt neben dem ersten y-Sensor auch der zweite y-Sensor oder einer der y-Antriebe zum Messen der Verdrehung verwendet.

Bevorzugt wird einer der y-Antriebe zum Fixieren des Läufers am Ort dieses y-Antriebes in der y-Richtung angesteuert, während der zweite x-Antrieb über die erste x-Wegstrecke verfahren wird. Dadurch kann sich der Läufer auch nicht in die y-Richtung translatorisch bewegen, was dazu führt, dass allein das Signal des ersten y-Sensors die Verdrehung des Läufers repräsentiert. Bevorzugt wird der zweite y-Antrieb zum Fixieren des Läufers am Ort des zweiten y-Antriebes in der y-Richtung angesteuert.

Alternativ wird bevorzugt auch das Signal des zweiten y-Sensors während des Verfahrens des zweiten x-Antriebes in Abhängigkeit von der mit der x-Ansteuereinheit angesteuerten ersten x-Wegstrecke des zweiten x-Antriebes aufgezeichnet. Die aufgezeichneten Signale des ersten y-Sensors und des zweiten y-Sensors repräsentieren gemeinsam die Verdrehung. Daher erfolgt das Kalibrieren der x-Ansteuereinheit durch ein Bewerten des Signals des ersten x-Sensors und/oder des zweiten x-Sensors mit den aufgezeichneten Signalen des ersten y-Sensors und des zweiten y-Sensors. Bevorzugt wird aus den aufgezeichneten Signalen des ersten y-Sensors und des zweiten y-Sensors ein die Verdrehung des Läufers repräsentierender Wert bestimmt, indem die Differenz der Signale des ersten y-Sensors und des zweiten y-Sensors bestimmt wird. Aus dem die Verdrehung repräsentierenden Wert wird ein Korrekturwert zur Kalibrierung der x-Ansteuereinheit, insbesondere zur Bewertung des Signals des ersten x-Sensors und/oder des zweiten x-Sensors bestimmt.

Das erfindungsgemäße Bewerten des Signals des y-Sensors mit dem aufgezeichneten Signal des ersten x-Sensors und ggf. des zweiten x-Sensors erfolgt bei besonderen Ausführungsformen im Frequenzraum, wofür die Signale bezogen auf eine in der y-Richtung ausgebildete Ortsfrequenz der y-Antriebe frequenzanalysiert werden, d. h. in den Frequenzraum transformiert werden und jeweils ein Koeffizient und ein Phasenwinkel einer ersten gewählten Harmonischen der Ortsfrequenz bestimmt werden. Auch können für weitere Bewertungsschritte weitere Harmonische bestimmt werden. Es können Harmonische unterschiedliche Ordnung gewählt werden. Die Ortsfrequenz wird bevorzugt durch die Beabstandung der Kraftübertragungselemente bestimmt. Die Ortsfrequenz gleicht bevorzugt dem Kehrwert der Motorperiode und/oder der Sensorperiode.

Der erste x-Antrieb, der ggf. vorhandene zweite x-Antrieb, der erste y-Antrieb und der zweite y-Antrieb sind bevorzugt jeweils als ein elektromagnetischer Antrieb, insbesondere als ein elektromagnetischer Linearantrieb ausgebildet. Hierfür weisen der erste x-Antrieb und der ggf. vorhandene zweite x-Antrieb bevorzugt jeweils mindestens zwei in der x-Richtung beabstandete Kraftübertragungselemente auf, deren Abstand in der x-Richtung eine Periode der beiden x-Antriebe bestimmt. Entsprechend weisen auch die beiden y-Antriebe bevorzugt jeweils mindestens zwei in der y-Richtung beabstandete Kraftübertragungselemente auf, deren Abstand in der y-Richtung eine Periode der beiden y-Antriebe bestimmt. Diese Kraftübertragungselemente der x-Antriebe und der y-Antriebe sind bevorzugt durch Pole eines Elektromagneten gebildet.

Der Stator weist bevorzugt jeweils in der x-Richtung und in der y-Richtung periodisch angeordnete Kraftübertragungselemente auf, deren Abstand alternativ oder ergänzend eine Periode der x-Antriebe bzw. der y-Antriebe bestimmt. Die Kraftübertragungselemente des Stators sind bevorzugt durch Zähne aus einem ferromagnetischen Material gebildet, sodass die Kraftübertragungselemente eine Zahnteilung auf dem Stator in der x-Richtung bzw. in der y-Richtung ausbilden.

Bevorzugt gleicht die Periode in der x-Richtung der Motorperiode einer der x-Antriebe und/oder einer Sensorperiode der x-Sensoren.

Der Abstand der Kraftübertragungselemente der x-Antriebe und der y-Antriebe und der Abstand der Kraftübertragungselemente des Stators sind bevorzugt gleich. Der Abstand der Kraftübertragungselemente der x-Antriebe und der y-Antriebe und der Abstand der Kraftübertragungselemente des Stators können aber auch unterschiedlich sein, beispielsweise wenn die x-Antriebe und die y-Antriebe als Linearschrittmotoren ausgebildet sind. Jedenfalls bestimmt entweder der Abstand der Kraftübertragungselemente der x-Antriebe und der y-Antriebe oder der Abstand der Kraftübertragungselemente des Stators oder sowohl der Abstand der Kraftübertragungselemente der x-Antriebe und der y-Antriebe als auch der Abstand der Kraftübertragungselemente des Stators die Periode der x-Antriebe und der y-Antriebe.

Der Stator des durch das erfindungsgemäße Verfahren zu kalibrierenden Planarantriebes weist bevorzugt eine periodische Magnetzahnteilung in der x-Richtung und eine periodische Magnetzahnteilung in der y-Richtung auf. Die periodische Magnetzahnteilung in der x-Richtung und die periodische Magnetzahnteilung in der y-Richtung weisen bevorzugt die gleiche Periodenlänge auf.

Der erste x-Antrieb und der ggf. vorhandene zweite x-Antrieb weisen bevorzugt jeweils mindestens einen Elektromagneten auf, dessen Pole einen Abstand zueinander besitzen, welcher der Periodenlänge der Magnetzahnteilung des Stators in der x-Richtung gleicht.

Der erste y-Antrieb und der zweite y-Antrieb weisen bevorzugt jeweils mindestens einen Elektromagneten auf, dessen Pole einen Abstand zueinander besitzen, welcher der Periodenlänge der Magnetzahnteilung des Stators in der y-Richtung gleicht.

Der Läufer weist bevorzugt eine rechteckige Grundfläche auf, welche parallel zum ebenen Stator ausgerichtet ist.

Der y-Sensor ist bevorzugt in der Mitte der rechteckförmigen Grundfläche angeordnet. Dabei ist der y-Sensor bevorzugt in der Mitte zwischen dem ersten x-Antrieb und dem zweiten x-Antrieb angeordnet.

Auch kann ein zweiter y-Sensor auf dem Läufer angeordnet sein, sodass der oben beschriebene y-Sensor den ersten y-Sensor bildet. Der zweite y-Sensor ist bevorzugt in der x-Richtung beabstandet zum ersten y-Sensor angeordnet.

Der erste x-Antrieb und der zweite x-Antrieb sind bevorzugt auch in der x-Richtung zueinander versetzt auf dem Läufer angeordnet.

Der erste x-Sensor und der zweite x-Sensor sind bevorzugt gegenüber dem y-Sensor in der y-Richtung versetzt auf dem Läufer angeordnet.

Der erste x-Sensor, der zweite x-Sensor und der y-Sensor weisen bevorzugt dieselbe Position in der x-Richtung auf dem Läufer auf.

Der y-Sensor ist bevorzugt mittig zwischen dem ersten x-Sensor und dem zweiten x-Sensor angeordnet.

Der erfindungsgemäße Planarantrieb kann beispielsweise durch einen Planarmotor oder durch ein x-y-Portal gebildet sein. Er umfasst zunächst einen bevorzugt ebenen Stator und einen gegenüber dem Stator in eine x-Richtung und in eine y-Richtung verfahrbaren Läufer. Die x-Richtung und die y-Richtung spannen eine Bewegungsebene des Läufers auf. Der Planarantrieb umfasst weiterhin mindestens einen auf dem Läufer angeordneten ersten x-Antrieb zum Antreiben des Läufers in die x-Richtung. Bevorzugt dient eine x-Ansteuereinheit des Planarantriebes zum Ansteuern des ersten x-Antriebes. Die erste x-Ansteuereinheit kann als Regelung oder als Steuerung ausgebildet sein.

Weiterhin umfasst der Planarantrieb einen auf dem Läufer angeordneten ersten y-Antrieb zum Antreiben des Läufers in die y-Richtung und einen auf dem Läufer angeordneten zweiten y-Antrieb zum Antreiben des Läufers in die y-Richtung. Der zweite y-Antrieb ist in der x-Richtung beabstandet zum ersten y-Antrieb angeordnet ist.

Der erste y-Antrieb, der zweite y-Antrieb und der mindestens eine x-Antrieb sind bevorzugt jeweils durch einen Elektromagneten gebildet, welcher mit magnetisierbaren Kraftübertragungselementen des Stators zusammenwirkt.

Der Planarantrieb umfasst weiterhin einen y-Sensor zur Bestimmung der Position des Läufers gegenüber dem Stator in der y-Richtung. Mithilfe des y-Sensors kann die y-Komponente der Position des Läufers gegenüber dem Stator gemessen werden. Der y-Sensor ist beabstandet zum ersten y-Antrieb auf dem Läufer angeordnet. Der y-Sensor ist bevorzugt in der x-Richtung beabstandet zum ersten y-Antrieb auf dem Läufer angeordnet. Der y-Sensor ist in der x-Richtung bevorzugt auch beabstandet zum zweiten y-Antrieb angeordnet. Dabei ist der y-Sensor bevorzugt auch in der y-Richtung jeweils zum ersten y-Antrieb und zum zweiten y-Antrieb beabstandet angeordnet.

Weiterhin umfasst der Planarantrieb eine y-Ansteuereinheit zum Ansteuern des y-Antriebes. Die y-Ansteuereinheit kann als Regelung oder als Steuerung ausgebildet sein. Der y-Sensor ist mit der y-Ansteuereinheit elektrisch verbunden und kann einen Teil der y-Ansteuereinheit bilden.

Der Planarantrieb umfasst mindestens einen auf dem Läufer angeordneten ersten x-Sensor zur Bestimmung der Position des Läufers gegenüber dem Stator in der x-Richtung. Der erste x-Sensor ist bevorzugt in der x-Richtung und/oder in der y-Richtung beabstandet zum ersten y-Antrieb auf dem Läufer angeordnet.

Bei dem mindestens einen x-Sensor und dem y-Sensor handelt es sich bevorzugt um inkrementell arbeitende Sensoren.

Die y-Ansteuereinheit ist zur Ausführung des erfindungsgemäßen Verfahrens konfiguriert. Bevorzugt ist die y-Ansteuereinheit zur Ausführung bevorzugter Ausführungsformen des erfindungsgemäßen Verfahrens konfiguriert. Im Weiteren weist der erfindungsgemäße Planarantrieb bevorzugt auch solche Merkmale auf, die für bevorzugte Ausführungsformen des erfindungsgemäßen Verfahrens als bevorzugte Merkmale des zu kalibrierenden Planarantriebes angegeben sind.

Weitere Einzelheiten des erfindungsgemäßen Planarantriebes ergeben sich aus der nachfolgenden Beschreibung einer bevorzugten Ausführungsform, unter Bezugnahme auf die Zeichnung.

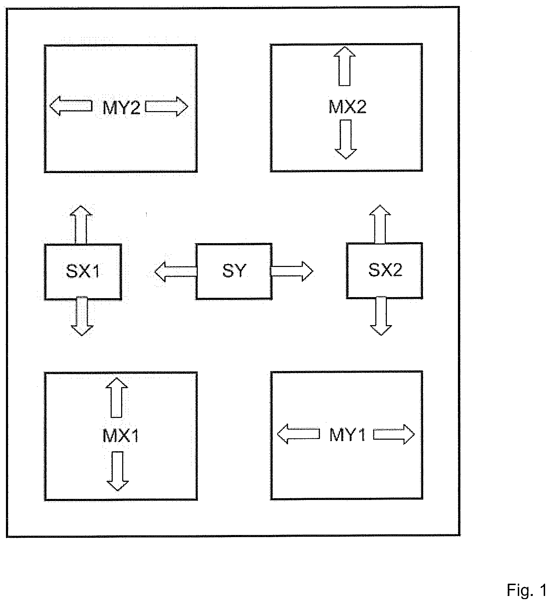

Die einzige Fig. 1 zeigt einen Läufer einer bevorzugten Ausführungsform eines erfindungsgemäßen Planarantriebes in einer Prinzipdarstellung. Der Läufer des Planarantriebes ist dazu ausgebildet, über einen Stator (nicht gezeigt) sowohl in einer x-Richtung als auch in einer y-Richtung verfahren zu werden. Der Läufer weist eine rechteckförmige Grundfläche auf, auf der ein erster x-Antrieb MX1, ein zweiter x-Antrieb MX2, ein erster y-Antrieb MY1 und ein zweiter y-Antrieb MY2 angeordnet sind. Weiterhin sind auf der rechteckförmigen Grundfläche des Läufers ein erster x-Sensor SX1, ein zweiter x-Sensor SX2 und ein y-Sensor SY angeordnet. Der y-Sensor SY befindet sich in der Mitte der rechteckförmigen Grundfläche des Läufers und mittig zwischen dem ersten x-Antrieb MX1 und dem zweiten x-Antrieb MX2, und auch mittig zwischen dem ersten y-Antrieb MY1 und dem zweiten y-Antrieb MY2 sowie mittig zwischen dem ersten x-Sensor SX1 und dem zweiten x-Sensor SX2. Der erste y-Antrieb MY1 befindet sich beabstandet zum y-Sensor SY, wobei ein Versatz in der x-Richtung als auch in der y-Richtung gegeben ist. Der erste x-Antrieb MX1 ist in der y-Richtung beabstandet zum zweiten x-Antrieb MX2 angeordnet. Auch ist der erste x-Antrieb MX1 beabstandet in der x-Richtung zum zweiten x-Antrieb MX2 angeordnet. Der erste x-Antrieb MX1 und der zweite x-Antrieb MX2 sind jeweils beabstandet zum y-Antrieb MY1 angeordnet.

## Patentansprüche

1. Verfahren zum Kalibrieren eines Planarantriebes, der einen Stator und einen gegenüber dem Stator in eine x-Richtung und in eine y-Richtung verfahrbaren Läufer umfasst, wobei die x-Richtung und die y-Richtung eine Bewegungsebene des Läufers aufspannen, und wobei der Planarantrieb folgende weitere Komponenten umfasst:
- mindestens einen auf dem Läufer angeordneten ersten x-Antrieb (MX1) zum Antreiben des Läufers in die x-Richtung;
- einen auf dem Läufer angeordneten ersten y-Antrieb (MY1) zum Antreiben des Läufers in die y-Richtung;
- einen y-Sensor (SY) zur Bestimmung der Position des Läufers gegenüber dem Stator in der y-Richtung, wobei der y-Sensor (SY) beabstandet zum ersten y-Antrieb (MY1) angeordnet ist;
- eine mit dem y-Sensor (SY) elektrisch verbundene y-Ansteuereinheit zum Ansteuern des ersten y-Antriebes (MY1) und
- mindestens einen ersten x-Sensor (SX1) zur Bestimmung der Position des Läufers gegenüber dem Stator in der x-Richtung;
wobei das Verfahren folgende Schritte umfasst:
- Ansteuern des ersten y-Antriebes (MY1) über die y-Ansteuereinheit zum Fixieren des Läufers am Ort des ersten y-Antriebes (MY1) in der y-Richtung;
**gekennzeichnet dadurch, dass** der Planarantrieb folgende Komponenten umfasst:
- einen auf dem Läufer angeordneten zweiten y-Antrieb (MY2) zum Antreiben des Läufers in die y-Richtung aufweist, wobei der zweite y-Antrieb (MY2) in der x-Richtung beabstandet zum ersten y-Antrieb (MY1) angeordnet ist, und die y-Ansteuereinheit den zweiten y-Antrieb (MY2) ansteuert, und
dass das Verfahren folgende Schritte umfasst:
Ansteuern des zweiten y-Antriebes (MY2) über die y-Ansteuereinheit zum Verfahren des Läufers über eine erste Wegstrecke in die y-Richtung, wobei es wegen des fixierenden ersten y-Antriebes (MY1) zum Verdrehen des Läufers in einer senkrecht zur Bewegungsebene angeordneten Drehachse kommt;
- Messen der Verdrehung des Läufers unter Verwendung des ersten x-Sensors (XS1), wobei das Signal des ersten x-Sensors (XS1) in Abhängigkeit von der mit der y-Ansteuereinheit angesteuerten ersten Wegstrecke des zweiten y-Antriebes (MY2) aufgezeichnet wird; und
- Kalibrieren der y-Ansteuereinheit durch ein Bewerten des Signals des y-Sensors (SY) mit dem aufgezeichneten Signal des ersten x-Sensors (XS1).

2. Verfahren nach Anspruch 1, **dadurch gekennzeichnet, dass** der Planarantrieb weiterhin einen zweiten x-Antrieb (MX2) zum Antreiben des Läufers in die x-Richtung umfasst, wobei der zweite x-Antrieb (MX2) in der y-Richtung beabstandet zum ersten x-Antrieb (MX1) auf dem Läufer angeordnet ist, und wobei der zweite x-Antrieb (MX2) zum Fixieren des Läufers am Ort des zweiten x-Antriebes in der x-Richtung angesteuert wird, während der zweite y-Antrieb über die erste Wegstrecke verfahren wird.

3. Verfahren nach Anspruch 1, **dadurch gekennzeichnet, dass** der Planarantrieb weiterhin einen zweiten x-Sensor (SX2) zur Bestimmung der Position des Läufers gegenüber dem Stator in der x-Richtung umfasst, wobei der zweite x-Sensor in der y-Richtung beabstandet zum ersten x-Sensor (SX1) angeordnet ist, wobei das Messen der Verdrehung des Läufers auch unter Verwendung des zweiten x-Sensors (SX2) erfolgt, wofür das Signal des zweiten x-Sensors in Abhängigkeit von der mit der y-Ansteuereinheit angesteuerten ersten Wegstrecke des zweiten y-Antriebes (MY2) aufgezeichnet wird, wobei das Kalibrieren der y-Steuereinheit durch ein Bewerten des Signals des y-Sensors (SY) mit den aufgezeichneten Signalen des ersten x-Sensors und des zweiten x-Sensors erfolgt.

4. Verfahren nach Anspruch 3, **dadurch gekennzeichnet, dass** ein Ansteuern des ersten x-Antriebes (MX1) unterbleibt, während der zweite y-Antrieb (MY2) über die erste Wegstrecke verfahren wird.

5. Verfahren nach Anspruch 3 oder 4, **dadurch gekennzeichnet, dass** aus den aufgezeichneten Signalen des ersten x-Sensors (SX1) und des zweiten x-Sensors (SX2) ein die Verdrehung des Läufers repräsentierender Wert bestimmt wird, indem die Differenz der Signale des ersten x-Sensors und des zweiten x-Sensors bestimmt wird, wobei aus dem die Verdrehung repräsentierenden Wert ein Korrekturwert zur Kalibrierung der y-Ansteuereinheit bestimmt wird.

6. Verfahren nach einem der Ansprüche 1 bis 5, **dadurch gekennzeichnet, dass** es folgende weitere Schritte umfasst, die nach dem Ansteuern des ersten y-Antriebs (MY1), nach dem Ansteuern des zweiten y-Antriebes (MY2) und nach dem Aufzeichnen des Signals des ersten x-Sensors (SX1) durchzuführen sind:
- Ansteuern des ersten y-Antriebes über die y-Ansteuereinheit zum Verfahren des Läufers über eine Versatzwegstrecke in die y-Richtung und anschließendes Ansteuern des ersten y-Antriebes über die y-Ansteuereinheit zum Fixieren des Läufers am erreichten Ort des ersten y-Antriebes;
- Ansteuern des zweiten y-Antriebes über die y-Ansteuereinheit zum Verfahren des Läufers über eine weitere Wegstrecke in die y-Richtung, wobei es wegen des fixierenden ersten y-Antriebes zum Verdrehen des Läufers in einer senkrecht zur Bewegungsebene angeordneten Drehachse kommt;
- fortgesetztes Messen der Verdrehung des Läufers unter Verwendung des ersten x-Sensors, wobei das Signal des ersten x-Sensors in Abhängigkeit von der mit der y-Ansteuereinheit angesteuerten weiteren Wegstrecke des zweiten y-Antriebes weiter aufgezeichnet wird; und
- fortgesetztes Kalibrieren der y-Steuereinheit durch ein Bewerten des Signals des y-Sensors (SY) dem aufgezeichneten weiteren Signal des ersten x-Sensors.

7. Verfahren nach einem der Ansprüche 1 bis 6, **dadurch gekennzeichnet, dass** der erste y-Antrieb (MY1) und der zweite y-Antrieb (MY2) jeweils mindestens zwei in der y-Richtung beabstandete Kraftübertragungselemente aufweisen, deren Abstand in der y-Richtung eine Periode der beiden y-Antriebe bestimmt, wobei die erste Wegstrecke und die gegebenenfalls verfahrenen weiteren Wegstrecken jeweils das Einfache oder genau einen ganzen Bruchteil der Periode betragen.

8. Verfahren nach Anspruch 7, **dadurch gekennzeichnet, dass** die Summe der ersten Wegstrecke und der gegebenenfalls verfahrenen weiteren Wegstrecken gleich der Periode ist.

9. Verfahren nach Anspruch 7, **dadurch gekennzeichnet, dass** die Summe der ersten Wegstrecke und der gegebenenfalls verfahrenen weiteren Wegstrecken ein Mehrfaches der Periode beträgt.

10. Planarantrieb, umfassend:
- einen Stator;
- einen gegenüber dem Stator in eine x-Richtung und in eine y-Richtung verfahrbaren Läufer, wobei die x-Richtung und die y-Richtung eine Bewegungsebene des Läufers aufspannen;
- mindestens einen auf dem Läufer angeordneten ersten x-Antrieb (MX1) zum Antreiben des Läufers in die x-Richtung;
- einen auf dem Läufer angeordneten ersten y-Antrieb (MY1) zum Antreiben des Läufers in die y-Richtung;
- einen auf dem Läufer angeordneten zweiten y-Antrieb (MY2) zum Antreiben des Läufers in die y-Richtung, wobei der zweite y-Antrieb (MY2) in der x-Richtung beabstandet zum ersten y-Antrieb (MY1) angeordnet ist;
- einen y-Sensor (SY) zur Bestimmung der Position des Läufers gegenüber dem Stator in der y-Richtung, wobei der y-Sensor (SY) beabstandet zum ersten y-Antrieb (MY1) angeordnet ist;
- eine mit dem y-Sensor (SY) elektrisch verbundene y-Ansteuereinheit zum Ansteuern des ersten y-Antriebes (MY1) und des zweiten y-Antriebes (MY2); und
- mindestens einen ersten x-Sensor (XS1) zur Bestimmung der Position des Läufers gegenüber dem Stator in der x-Richtung;
**dadurch gekennzeichnet, dass** die y-Ansteuereinheit zur Ausführung des Verfahrens nach einem der Ansprüche 1 bis 9 konfiguriert ist.

## Claims

1. Method for calibrating a planar drive which comprises a stator and a rotor which can be moved in an x direction and in a y direction with respect to the stator, wherein the x direction and the y direction span a movement plane of the rotor, and wherein the planar drive comprises the following further components:
- at least one first x drive (MX1) which is arranged on the rotor, for driving the rotor in the x direction;
- a first y drive (MY1) which is arranged on the rotor, for driving the rotor in the y direction;
- a y sensor (SY) for determining the position of the rotor with respect to the stator in the y direction, wherein the y sensor (SY) is arranged spaced apart from the first y drive (MY1);
- a y actuation unit which is electrically connected to the y sensor (SY), for actuating the first y drive (MY1), and
- at least one first x sensor (SX1) for determining the position of the rotor with respect to the stator in the x direction;
wherein the method comprises the following steps:
- actuating the first y drive (MY1) by means of the y actuation unit for securing the rotor at the location of the first y drive (MY1) in the y direction;
**characterized in that** the planar drive comprises the following components:
- has a second y drive (MY2) which is arranged on the rotor, for driving the rotor in the y direction, wherein the second y drive (MY2) is arranged spaced apart from the first y drive (MY1) in the x direction, and the y actuation unit actuates the second y drive (MY2), and
**in that** the method comprises the following steps:
- actuating the second y drive (MY2) by means of the y actuation unit in order to move the rotor over a first distance in the y direction, wherein, owing to the securing first y drive (MY1), the rotor rotates in a rotational axis arranged perpendicularly with respect to the plane of movement;
- measuring the rotation of the rotor using the first x sensor (XS1),
wherein the signal of the first x sensor (XS1) is recorded as a function of the first distance, actuated with the y actuation unit, of the second y drive (MY2); and
- calibrating the y actuation unit by evaluating the signal of the y sensor (SY) with the recorded signal of the first x sensor (XS1).

2. Method according to Claim 1, **characterized in that** the planar drive also comprises a second x drive (MX2) for driving the rotor in the x direction, wherein the second x drive (MX2) is arranged on the rotor, spaced apart from the first x drive (MX1), in the y direction, and wherein the second x drive (MX2) is actuated to secure the rotor at the location of the second x drive in the x direction, wherein the second y drive is moved over the first distance.

3. Method according to Claim 1, **characterized in that** the planar drive also comprises a second x sensor (SX2) for determining the position of the rotor with respect to the stator in the x direction, wherein the second x sensor is arranged spaced apart from the first x sensor (SX1) in the y direction, wherein the rotation of the rotor is also measured by using the second x sensor (SX2), for which purpose the signal of the second x sensor is recorded as a function of the first distance, actuated with the y actuation unit, of the second y drive (MY2), wherein the y control unit is calibrated by evaluating the signal of the y sensor (SY) with the recorded signals of the first x sensor and of the second x sensor.

4. Method according to Claim 3, **characterized in that** the first x drive (MX1) is not actuated while the second y drive (MY2) is moved over the first distance.

5. Method according to Claim 3 or 4, **characterized in that** a value which represents the rotation of the rotor is determined from the recorded signals of the first x sensor (SX1) and of the second x sensor (SX2), **in that** the difference between the signals of the first x sensor and the second x sensor is determined, wherein a correction value for calibrating the y actuation unit is determined from the value representing the rotation.

6. Method according to one of Claims 1 to 5, **characterized in that** said method comprises the following further steps which are to be carried out after the actuation of the first y drive (MY1), after the actuation of the second y drive (MY2) and after the recording of the signal of the first x sensor (SX1):
- actuating the first y drive by means of the y actuation unit in order to move the rotor over an offset distance in the y direction, and subsequent actuation of the first y drive by means of the y actuation unit to secure the rotor at the location reached by the first y drive;
- actuating the second y drive by means of the y actuation unit to move the rotor over a further distance in the y direction, wherein, owing to the securing first y drive, the rotor is rotated on a rotational axis arranged perpendicularly with respect to the plane of the movement;
- continued measurement of the rotation of the rotor using the first x sensor, wherein the signal of the first x sensor continues to be recorded as a function of the further distance, actuated with the y actuation unit, of the second y drive; and
- continued calibration of the y control unit by evaluating the signal of the y sensor (SY) the recorded further signal of the first x sensor.

7. Method according to one of Claims 1 to 6, **characterized in that** the first y drive (MY1) and the second y drive (MY2) each have at least two force transmission elements which are spaced apart in the y direction and the distance between which in the y direction determines a period of the two y drives, wherein the first distance and the further distances which have, if appropriate, been travelled along each constitute one times the period or precisely a whole fraction of the period.

8. Method according to Claim 7, **characterized in that** the sum of the first distance and of the further distances which have, if appropriate, been moved along is equal to the period.

9. Method according to Claim 7, **characterized in that** the sum of the first distance and of the further distances which have, if appropriate, been moved along constitutes a multiple of the period.

10. Planar drive comprising:
- a stator;
- a rotor which can be moved in an x direction and in a y direction with respect to the stator, wherein the x direction and the y direction span a plane of movement of the rotor;
- at least one first x drive (MX1) which is arranged on the rotor, for driving the rotor in the x direction;
- a first y drive (MY1) which is arranged on the rotor, for driving the rotor in the y direction;
- a second y drive (MY2) which is arranged on the rotor, for driving the rotor in the y direction, wherein the second y drive (MY2) is arranged spaced apart from the first y drive (MY1) in the x direction;
- a y sensor (SY) for determining the position of the rotor with respect to the stator in the y direction, wherein the y sensor (SY) is arranged spaced apart from the first y drive (MY1);
- a y actuation unit which is electrically connected to the y sensor (SY), for actuating the first y drive (MY1) and the second y drive (MY2); and
- at least one first x sensor (XS1) for determining the position of the rotor with respect to the stator in the x direction;
**characterized in that** the y actuation unit is configured to carry out the method according to one of Claims 1 to 9.

## Revendications

1. Procédé d'étalonnage d'un entraînement planaire qui comprend un stator et un rotor pouvant être déplacé par rapport au stator dans une direction x et dans une direction y, dans lequel la direction x et la direction y définissent un plan de mouvement du rotor, et dans lequel l'entraînement planaire comprend les autres composants suivants :
- au moins un premier entraînement x (MX1) disposé sur le rotor pour entraîner le rotor dans la direction x ;
- un premier entraînement y (MY1) disposé sur le rotor pour entraîner le rotor dans la direction y ;
- un capteur y (SY) pour déterminer la position du rotor par rapport au stator dans la direction y, dans lequel le capteur y (SY) est disposé de manière espacée de l'entraînement y (MY1) ;
- une unité de commande y électriquement reliée au capteur y (SY) pour commander le premier entraînement y (MY1), et
- au moins un premier capteur x (SX1) pour déterminer la position du rotor par rapport au stator dans la direction x ;
dans lequel le procédé comprend les étapes suivantes :
- commander le premier entraînement y (MY1) par l'intermédiaire de l'unité de commande y pour fixer le rotor à la position du premier entraînement y (MY1) dans la direction y ;
**caractérisé en ce que** l'entraînement planaire comprend les composants suivants :
- présente un deuxième entraînement y (MY2) disposé sur le rotor pour entraîner le rotor dans la direction y, dans lequel le deuxième entraînement y (MY2) est disposé de manière espacée dans la direction x du premier entraînement y (MY1), et l'unité de commande y commande le deuxième entraînement y (MY2), et
**en ce que** le procédé comprend les étapes suivantes :
- commander le deuxième entraînement y (MY2) par l'intermédiaire de l'unité de commande y pour déplacer le rotor sur une première course de déplacement dans la direction y, dans lequel il se produit une rotation du rotor suivant un axe de rotation disposé perpendiculairement au plan de mouvement en raison de l'effet de fixation du premier entraînement y (MY1) ;
- mesurer la rotation du rotor en utilisant le premier capteur x (XS1), dans lequel le signal du premier capteur x (XM1) est enregistré en fonction de la première course de déplacement du deuxième entraînement y (MY2) commandé par l'unité de commande y ; et
- étalonner l'unité de commande y en évaluant le signal du capteur y (SY) à l'aide du signal enregistré du premier capteur x (XS1).

2. Procédé selon la revendication 1, **caractérisé en ce que** l'entraînement planaire comprend en outre un deuxième entraînement x (MX2) pour entraîner le rotor dans la direction x, dans lequel le deuxième entraînement x (MX2) est disposé sur le rotor de manière espacée du premier entraînement x (MX1), et dans lequel le deuxième entraînement x (MX2) est commandé dans la direction x afin de fixer le rotor à l'emplacement du deuxième entraînement x, pendant que le deuxième entraînement y est déplacé sur la première course de déplacement.

3. Procédé selon la revendication 1, **caractérisé en ce que** l'entraînement planaire comprend en outre un deuxième capteur x (SX2) pour déterminer la position du rotor par rapport au stator dans la direction x, dans lequel le deuxième capteur x est disposé de manière espacée dans la direction y du premier capteur x (SX1), dans lequel la mesure de la rotation du rotor s'effectue également par utilisation du deuxième capteur x (SX2), le signal du deuxième capteur x étant pour cela enregistré en fonction de la première course de déplacement du deuxième entraînement y (MY2) commandé par l'unité de commande y, dans lequel l'étalonnage de l'unité de commande y est effectué par une évaluation du signal du capteur y (SY) avec les signaux enregistrés du premier capteur x et du deuxième capteur x.

4. Procédé selon la revendication 3, **caractérisé en ce qu'**une commande du premier entraînement x (MX1) est empêchée pendant que le deuxième entraînement y (MY2) est déplacé sur la deuxième course de déplacement.

5. Procédé selon la revendication 3 ou 4, **caractérisé en ce qu'**une valeur représentant la rotation du rotor est déterminée à partir des signaux enregistrés du premier capteur x (SX1) et du deuxième capteur x (SX2) en déterminant la différence entre les signaux du premier capteur x et du deuxième capteur x, dans lequel une valeur de correction permettant d'étalonner l'unité de commande y est déterminée à partir de la valeur représentant la rotation.

6. Procédé selon l'une quelconque des revendications 1 à 5, **caractérisé en ce qu'**il comprend les étapes supplémentaires suivantes, qui sont effectuées après la commande du premier entraînement y (MY1), après la commande du deuxième entraînement y (MY2) et après l'enregistrement du signal du premier capteur x (SX1) :
- commander le premier entraînement y par l'intermédiaire de l'unité de commande y pour déplacer le rotor sur une course de décalage dans la direction y puis commander le premier entraînement y par l'intermédiaire de l'unité de commande y pour fixer le rotor à l'emplacement atteint par le premier entraînement y,
- commander le premier entraînement y par l'intermédiaire de l'unité de commande y pour déplacer le rotor sur une autre course de décalage dans la direction y, dans lequel il se produit une rotation du rotor suivant un axe de rotation disposé perpendiculairement au plan de déplacement en raison de l'effet de fixation du premier entraînement y ;
- poursuivre la mesure de la rotation du rotor en utilisant le premier capteur x, dans lequel le signal du premier capteur x est en outre enregistré en fonction de l'autre course du deuxième entraînement y commandée par l'unité de commande y ; et
- poursuivre l'étalonnage de l'unité de commande y en évaluant le signal du capteur y (SY) l'autre signal enregistré du premier capteur x.

7. Procédé selon l'une quelconque des revendications 1 à 6, **caractérisé en ce que** le premier entraînement y (MY1) et le deuxième entraînement y (MY2) comportent respectivement au moins deux éléments de transmission de force espacés dans la direction y, dont la distance dans la direction y détermine une période des deux entraînements y, dans lequel la première course et les courses supplémentaires éventuellement parcourues sont respectivement égales à une période ou exactement à une fraction entière de la période.

8. Procédé selon la revendication 7, **caractérisé en ce que** la somme de la première course de déplacement et des autres courses éventuellement parcourues est égale à la période.

9. Procédé selon la revendication 7, **caractérisé en ce que** la somme de la première course et des autres courses éventuellement parcourues est égale à un multiple de la période.

10. Entraînement planaire, comprenant :
- un stator ;
- un rotor pouvant être déplacé par rapport au stator dans une direction x et dans une direction y, dans lequel la direction x et la direction y définissent un plan de déplacement du rotor ;
- au moins un premier entraînement x (MX1) disposé sur le rotor pour entraîner le rotor dans la direction x ;
- un premier entraînement y (MY1) disposé sur le rotor pour entraîner le rotor dans la direction y ;
- un deuxième entraînement y (MY2) disposé sur le rotor pour entraîner le rotor dans la direction y, dans lequel le deuxième entraînement y (MY2) est disposé de manière espacée du premier entraînement y (MY1) dans la direction x ;
- un capteur y (SY) pour déterminer la position du rotor par rapport au stator dans la direction y, dans lequel le capteur y (SY) est disposé de manière espacée du premier entraînement y (MY1) ;
- une unité de commande y électriquement reliée au capteur y (SY) pour commander le premier entraînement y (MY1) et le deuxième entraînement y (MY2) ; et
- au moins un premier capteur x (SX1) pour déterminer la position du rotor par rapport au stator dans la direction x ;
**caractérisé en ce que** l'unité de commande y est configurée pour mettre en oeuvre le procédé selon l'une quelconque des revendications 1 à 9.
